(19) Europäisches Patentamt
European Patent Office
Office européen des brevets

(11) Veröffentlichungsnummer: **0 339 423 B1**

(12) **EUROPÄISCHE PATENTSCHRIFT**

(45) Veröffentlichungstag der Patentschrift: **10.08.94**

(51) Int. Cl.[5]: **C08L 71/00**, C08L 81/06, C08L 51/04, //(C08L71/00, 51:04),(C08L81/06,51:04)

(21) Anmeldenummer: **89106826.4**

(22) Anmeldetag: **17.04.89**

# (54) Thermoplastische Formmassen aus aromatischen Polyethersulfonen.

(30) Priorität: **28.04.88 DE 3814286**

(43) Veröffentlichungstag der Anmeldung:
**02.11.89 Patentblatt 89/44**

(45) Bekanntmachung des Hinweises auf die Patenterteilung:
**10.08.94 Patentblatt 94/32**

(84) Benannte Vertragsstaaten:
**DE FR GB IT**

(56) Entgegenhaltungen:
**DE-A- 1 944 044**
**DE-A- 3 601 419**
**FR-A- 2 022 068**

**PATENT ABSTRACTS OF JAPAN vol. 3, no. 118 (C-60) 04 Oktober 1979,& JP-A-54 97655**

(73) Patentinhaber: **BAYER AG**

**D-51368 Leverkusen(DE)**

(72) Erfinder: **Eckel, Thomas, Dr.**
**Gneisenaustrasse 15 a**
**D-4047 Dormagen 1(DE)**
Erfinder: **Fuhr, Karl, Dr.**
**Kruellsdyk 55**
**D-4150 Krefeld 1(DE)**
Erfinder: **Wittmann, Dieter, Dr.**
**Wolfskaul 4**
**D-5000 Koeln 80(DE)**
Erfinder: **Ott, Karl-Heinz, Dr.**
**Paul-Klee-Strasse 54**
**D-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft thermoplastische Formmassen auf Basis von aromatischen Polyethersulfonen und speziell gepfropften, teilchenförmigen Butadienkautschuken, ein Verfahren zu ihrer Herstellung durch Mischen der Komponenten bei erhöhter Temperatur und ihre Verwendung zur Herstellung von Formkörpern vornehmlich durch Spritzguß.

Formmassen auf Basis aromatischer Polyethersulfone sind bekannt. Sie besitzen sehr hohe Wärmeformbeständigkeiten, erreichen jedoch häufig nicht die für bestimmte Anwendungen geforderten hohen Kerbschlagzähigkeiten.

Zur Verbesserung der Schlagzähigkeiten wurden Mischungen von Polyethersulfonen mit ABS vorgeschlagen, jedoch geht dabei die Wärmeformbeständigkeit der Formmassen stark zurück (DE-AS 1 794 171, US 3.555.119). Werden Polyethersulfone mit geringen Mengen eines Schlagzähmodifikators vom ABS-Typ gemischt, so bleibt die Wärmeformbeständigkeit zwar auf einem hohen Niveau, die Kerbschlagzähigkeiten erreichen jedoch nicht die hohen Werte wie bei den zuvor genannten Formmassen besonders nicht bei tiefen Temperaturen.

Durch Mischen von Polyethersulfonen mit speziellen Modifikatoren wie Styrol/Methylmethacrylat gepfropftem Butadien-(US 3 646 462, DE 3 601 419, DE 1 944 044, Acrylat-(DE 3 601 419, DE 1 944 044) oder EPDM-Kautschuken (US 3 641 207) wird die Raumtemperaturkerbschlagzähigkeit verbessert, die Tieftemperaturkerbschlagzähigkeit liegt jedoch auf einem niedrigen Niveau.

Überraschenderweise wurde nun gefunden, daß sich Mischungen aus aromatischen Polyethersulfonen und gepfropften Butadienkautschuken dann zu Formkörpern verarbeiten lassen, die sowohl über eine sehr hohe Wärmeformbeständigkeit als auch über sehr gute Kerbschlagzähigkeiten auch bei tiefen Temperaturen verfügen, wenn speziell gepfropfte teilchenförmige Butadienkautschuke verwendet werden. Die erfindungsgemäß eingesetzten Butadienpfropfkautschuke besitzen eine spezielle Pfropfhülle, die zum überwiegenden Teil aus Methylmethacrylat und kleineren Anteilen Butylacrylaten besteht.

Gegenstand der Erfindung sind thermoplastische Formmassen enthaltend

A. 5 bis 99, vorzugsweise 40 bis 98, insbesondere 60 bis 97, bezogen auf die Summe A + B, eines aromatischen Polyethersulfons und

B. 1 bis 95, vorzugsweise 2 bis 60, insbesondere 3 bis 40 Gew.-%, bezogen auf die Summe A + B, eines Pfropfpolymerisate von

B.1 5 bis 90, vorzugsweise 10 bis 70, insbesondere 15 bis 50 Gew.-Teilen einer Mischung aus

B.1.1 20 bis 99, vorzugsweise 50 bis 97, insbesondere 70 bis 95 Gewichtsteilen Methylmethacrylat und

B.1.2 1 bis 40, vorzugsweise 1 bis 20, Gew.-Teilen Arylsäureester eines primären oder sekundären einwertigen aliphatischen $C_2$-$C_{10}$-Alkohols und gegebenenfalls

B.1.3 0 bis 10, vorzugsweise 0 bis 4, Gew.-Teilen Acryl- oder Methacrylsäureester des tert.-Butanols und/oder

B.1.4 0 bis 30, vorzugsweise 0 bis 20 Gewichtsteilen einer Mischung aus 50 bis 95 Gewichtsteilen Styrol, $\alpha$-Methylstyrol, $C_1$-$C_4$-Alkyl- oder Halogenkernsubstituenten Styrol oder Mischungen daraus und 5 bis 50 Gewichtsteilen Acrylnitril, Methacrylnitril, Maleinsäureanhydrid, $C_1$-$C_4$-Alkyl- bzw. Phenyl-N-substituiertem Maleinimid oder Mischungen daraus, wobei die Summe der Gewichtsteile aus B.1.1 und B.1.2 sowie gegebenenfalls B.1.3 und/oder B.1.4 100 betragen soll, auf

B.2 10 bis 95, vorzugsweise 30 bis 90, insbesondere 50 bis 85 Gewichtsteile eines ver netzten Butadienkautschuks mit einem mittleren Teilchendurchmesser $d_{50}$ von 0.05 bis 1, vorzugsweise 0.05 bis 0.8 $\mu$m und insbesondere von 0.05 bis 0.6 $\mu$m und einem Gelgehalt von mehr

als 50, vorzugsweise mehr als 70, insbesondere 73 bis 98, Gew.-%, bezogen auf Gewicht an B.2.

Komponente A

Aromatische Polyethersulfone im Sinne der Erfindung lassen sich als lineare, thermoplastische Polyarylenpolyetherpolysulfone beschreiben, in welchem die Aryleneinheiten von Ether- und Sulfonbindungen unterbrochen sind. Diese Harze erhält man durch Umsetzung eines Alkalimetalldoppelsalzes eines zweiwertigen Phenols (Bisphenols) mit einer zwei Halogenatome aufweisenden benzoiden Verbindung, wobei entweder eine oder beide Verbindung(en) die zum Einbau von Sulfoneinheiten in die Arylen- und Ethereinheiten aufweisende Polymerenkette notwendige Sulfonbindung ($-SO_2-$) besitzt. Die Polyethersulfone sowie ihre Herstellung sind literaturbekannt. (Siehe beispielsweise US 3 264 536, GB 1 264 900, EP 0 038 028).

Das Polyethersulfonharz besitzt eine Grundstruktur, die aus wiederkehrenden Einheiten der Formel (I)

{O-Z-O-W} (I)

besteht.

Darin bedeuten:

Z den Rest eines zweiwertigen Phenols und

W den Rest der benzoiden Verbindung mit einer inerten, elektronenanziehenden Gruppe,

wobei gilt, daß beide Reste durch aromatische Kohlenstoffatome über Valenzbindungen mit den Ethersauerstoffatomen verbunden sind und mindestens einer der Reste Z und/oder W eine Sulfongruppe zwischen aromatischen Kohlenstoffatomen liefert. Solche Polyethersulfone gehören in die in der USA-Patentschrift 3 264 536 beschriebene Klasse von Polyarylen-polyetherharzen.

Bevorzugte Diphenole für die Herstellung der aromatischen Polyethersulfone gemäß Komponente A sind Verbindungen der Formel (II)

HO - Z - OH (II)

worin Z einen zweiwertigen ein- oder mehrkernigen aromatischen Rest mit 6 - 30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel (III)

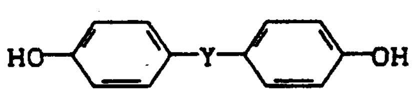

(III),

in der

Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-,

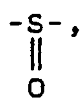

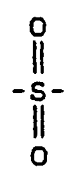 oder 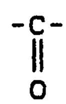

bedeutet,

sowie deren kernalkylierte und kernhalogenierte Derivate.

Beispiel für Diphenole sind:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
$\alpha,\alpha'$-Bis-(hydroxyphenyl)diisopropylbenzole
sowie deren kernalkylierte und kernhalogenierte Derivate.

Die wichtigsten Diphenole sind; Bisphenol A, Tetramethylbisphenol A, 1,1-Bis-(4-hydroxyphenyl)-isobutan, 1,1-Bis-(4-hydroxyphenyl)cyclohexan, 4,4'Dihydroxydiphenylsulfid,4,4'-Dihydroxydiphenylsulfon sowie

deren di- und tetrahalogenierte Derivate. Besonders bevorzugt ist Bisphenol A. Es können auch beliebige Mischungen der genannten Diphenole verwendet werden.

Bevorzugte aromatische Dihalogenverbindungen sind zweikernige Verbindungen der Formel (IV)

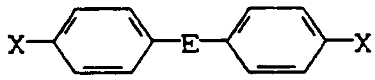

(IV)

Darin bedeuten X Halogenatome wie F, Cl, Br. J-Atome und E elektronenanziehende Gruppen, wie beispielsweise eine Sulfon-, Carbonyl-, Vinyl-, Sulfoxid- oder Azogruppe. Jeder der beiden Kerne kann zusätzlich eine oder mehrere Substituenten aus der Gruppe der gesättigten Kohlenwasserstoffe oder der elektronenanziehenden Verbindungen tragen.

Bevorzugte aromatische Dihalogenverbindungen sind 4,4′-Dichlordiphenylsulfon und 4,4′-Dichlorbenzophenon.

Mögliche Verzweigungsmittel sind die für die Herstellung von aromatischen Polyestern (DE-OS 2 940 024) und für die Herstellung von aromatischen Polyestercarbonaten (DE-OS 3 007 934) genannten. (Siehe Seiten 9 und 10 der DE-OS 2 940 024 und Seite 9 der DE-OS 3 007 934).

Als Kettenabbrecher für die aromatischen Polyethersulfone gemäß Komponente A werden vorzugsweise Phenol, Alkylphenole mit $C_1$-$C_{12}$-Alkylgruppen und halogenierte Phenole sowie Bromide und Chloride von $C_1$-$C_{10}$-Alkane in Mengen von 0,1 bis 10 Mol-% (im Falle von Phenolen, bezogen auf Diphenole, im Falle von Chloriden bezogen auf die aromatische Dihalogen-Verbindungen) verwendet.

Die reduzierten Viskositäten ($\eta_{red}$) der aromatischen Polyethersulfone A liegen im Bereich von 0,15 bis 1,5 dl/g vorzugsweise von 0,35 bis 0,65 dl/g (gemessen an Lösungen von 20 mg Polyethersulfon A in 10 ml $CHCl_3$ bei 25 °C).

Komponente B

Bevorzugte Pfropfpolymerisate B sind solche, die man, durch Pfropfpolymerisation von 5 bis 90 Gew.-Teilen, vorzugsweise von 10 bis 70 Gew.-Teilen, insbesondere 15 bis 50 Gew.-Teilen, wenigstens eines Vinylmonomerengemisches aus Methylmethacrylat und einem Acrylsäureester eines primären oder sekundären einwertigen aliphatischen $C_2$-$C_{10}$-Alkohols, wie beispielsweise n-Butylacrylat, auf 10 bis 95, vorzugsweise 30 bis 90, insbesondere 50 bis 85 Gew,-Teile eines teilchenförmigen, vernetzten Dienkautschuks, erhält.

Zusätzlich können als Pfropfmonomere noch bis 10 Gewichtsteile des Acryl- oder Methacrylsäureesters des tertiären Butanols und/oder bis 30 Gewichtsteile einer Mischung aus Styrol oder $\alpha$-Methylstyrol und Acrylnitril, Methacrylnitril oder Maleinsäureanhydrid auf die Pfropkautschukgrundlage aufgepfropft werden.

Besonders bevorzugte Pfropfmonomere sind Mischungen von Methylmethacrylat und n-Butylacrylat im Mengenverhältnis 85:15 bis 98:2, sowie Mischungen davon mit t-Butylacrylat und/oder mit Styrol und Acrylnitril.

Bevorzugte Dienkautschuke B.2 sind vernetzte Homo-und/oder Copolymerisate aus konjugierten $C_4$-$C_6$-Dienen. Bevorzugte Diene sind Butadien-1,3, Isopren und Chloropren. Die Diencopolymerisate können neben den Dienresten bis zu 20 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$-$C_4$-Alkoholen, wie z.B. Methylacrylat, Ethylacrylat, Methylmethacrylat und Ethylmethacrylat, einpolymerisiert enthalten.

Die Herstellung der Dienkautschuk-Pfropfgrundlage B.2 und der daraus hergestellten Pfropfpolymerisate B wird z.B. in "Methoden der Organischen Chemie" (Houben-Weyl), Bd. 14/1, Georg Thieme Verlag, Stuttgart 1961, S. 393 - 406, sowie in Ullmanns Encyclopädie der technischen Chemie, 4. Auflage, Bd. 19, Verlag Chemie, Weinheim, 1981, S. 279 - 284, beschrieben.

Bei der Herstellung der Pfropfpolymerisate B durch Pfropfcopolymerisation, die üblicherweise in Gegenwart von Radikalstartern, z.B. wasserlöslichen Initiatoren, Emulgatoren oder Komplexbildnern/Pfropfaktivatoren, sowie Reglern durchgeführt, wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfpolymerisate B im Sinne der Erfindung ist deshalb das durch Polymerisation von Pfropfmonomeren B.1 in Gegenwart des Dienkautschuks B.2 erhaltene Produkt.

Die erfindungsgemäßen Formmassen weisen optimale Eigenschaften auf, wenn die Menge an freiem (Co)Polymerisat im Pfropfpolymerisat B 30 Gew.-%, vorzugsweise 20 Gew.-%, insbesondere 10 Gew.-%, bezogen auf B, nicht übersteigt.

Der Staudinger-Index dieser freien (Co)Polymerisate soll weniger als 0,6 dl/g, vorzugsweise weniger als 0,4 dl/g betragen, gemessen in Dimethylformamid bei 25 °C.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z, und Z. Polymere 250 (1972), 782 - 796) oder mittels Elektronenmikroskopie und anschließender Teilchenauszählung (G. Kämpf, H. Schuster, Angew. makromolekulare Chemie, 14, (1970), 111 - 129) oder mittels Lichtstreuungsmessungen.

Die Gelgehalte der vernetzten Dienkautschuke werden bestimmt bei 25 °C in Toluol (M. Hoffmann, H. Krömer, R. Kuhn, Polymeranalytik I und II, Georg Thieme Verlag, Stuttgart 1977).

Als Radikalbildner können anorganische oder organische Peroxide oder Hydroperoxide, z.B. Verbindungen des Typs $R_1OOR_2$ eingesetzt werden ($R_1$ = $R_2$ = Alkyl, Aryl, Acyl, Wasserstoff; $R_1$ = Alkyl, Acryl, Acyl; $R_2$ = Wasserstoff). Die Gesamtzahl der Kohlenstoffatome in den Resten $R_1$ und $R_2$ ist $\leq 30$, bevorzugt $\leq 25$, Beispiele sind Peroxide oder Hydroperoxide wie Dibenzoylperoxid, tert.-Butylhydroperoxid, Cumolhydroperoxid, Laurylperoxid, 2,5-Di-tert.butyl-2,5-dimethylhexyl-peroxid, Di-tert.butyl-peroxid oder Di-cumylperoxid.

Des weiteren sind anorganische Verbindungen mit einer O-O-Gruppierung, wie z.B. Peroxide, Per-Verbindungen von Säuren des Schwefels, z.B. Persulfate, oder auch Perborate als Radikalbildner geeignet. Bevorzugt werden Persulfate, z.B. $K_2S_2O_8$. Beispiele sind $(NH_4)_2S_2O_8$, $Na_2S_2O_8$, $Na_2O_2$, $NaBO_3 \cdot 4H_2O$, $Na_2B_4O_8 \cdot 10H_2O$.

Ein ganz besonders bevorzugter Mengenbereich an Peroxid/Hydroperoxid-Verbindungen liegt bei 0,05 bis 0,30 Gew.-%.

Die so hergestellten Pfropfpolymerisate B können nach bekannten Verfahren aufgearbeitet werden, z.B. durch Koagulation der Latices mit Elektrolyten (Salzen, Säuren oder Gemischen davon) und anschließende Reinigung und Trocknung.

Die erfindungsgemäßen Formmassen können weitere, für aromatische Polyethersulfone sowie für Pfropfpolymerisate bekannte Zusätze, wie Stabilisatoren, Pigmente, Entformungsmittel, Flammschutzmittel und/oder Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Gegenstand der vorliegenden Erfindung ist somit auch ein Verfahren zur Herstellung von thermoplastischen Formmassen enthaltend die Komponente A, B und gegebenenfalls Stabilisatoren, Pigmente, Entformungsmittel, Flammschutzmittel und/oder Antistatika, das dadurch gekennzeichnet ist, daß man die Komponenten A, B und gegebenenfalls Stabilisatoren, Pigmente, Entformungsmittel, Flammschutzmittel und/oder Antistatika in bekannter Weise vermischt und bei erhöhten Temperaturen, vorzugsweise bei Temperaturen von 200 °C bis 350 °C, in üblichen Vorrichtungen wie Innenknetern, Extrudern oder Doppelschnecken, schmelzcompoundiert oder schmelzextrudiert.

Die erfindungsgemäßen Formmassen können zur Herstellung von Formkörpern jeder Art, z.B. durch Spritzgießen verwendet werden. Beispiele für Formkörper sind: Gehäuseteile (z.B. für Haushaltsgeräte, wie Saftpressen, Kaffeemaschinen, Mixer, Mikrowellengeschirr), Abdeckplatten für das Baugewerbe, Automobilteile. Sie werden außerdem für elektrische Geräte, z.B. für Steckerleisten, Spulenkörper und Leiterplatten, eingesetzt.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

## Beispiele

Angegebene Teile bedeuten Gewichtsteile.

### A. Aromatisches Polyethersulfon

1141,7 Teile Bis-2,2(4-hydroxyphenyl)propan und 1435,8 Teile Bis-(4-chlor-phenyl)-sulfon werden unter Stickstoff in 4500 Teilen N-Methylpyrrolidon und 970 Teilen Chlorbenzol gelöst und mit 760 Teilen wasserfreiem Kaliumcarbonat versetzt. Das Reaktionsgemisch wird innerhalb von 30 Minuten auf 180 °C erhitzt und dort für 5 Stunden gehalten, wobei ein Gemisch aus Wasser und Chlorbenzol abdestilliert. Innerhalb weiterer 4 Stunden wird das Chlorbenzol abdestilliert. Nach einer Reaktionszeit von 6 Stunden wird das Reaktionsgemisch auf 60 - 70 °C abgekühlt, das Polymere in Methanol ausgefällt, mit Wasser gewaschen und im Vakuum getrocknet. Das Produkt besitzt eine reduzierte Viskosität von $\eta_{red}$ = 0,52 dl/g ($CHCl_3$ bei 25 °C).

### B. Pfropfpolymerisat

B 1: Pfropfprodukte hergestellt durch Emulsionspolymerisation aus 80 Gew,-% Pfropfgrundlage aus vernetztem Polybutadien (Gelgehalt 85 Gew.-%, gemessen in Toluol) und 20 Gew.-% einer Pfropfauflage aus Methylmethacrylat und n-Butylacrylat im Verhältnis 9 : 1, mittlerer Teilchendurchmesser $d_{50}$ = 0,4 µm.

### Herstellung und Prüfung der erfindungegemäßen Formmassen

Die Komponenten A und B wurden auf einem 1,3-l-Innenkneter bei Temperaturen zwischen 210 und 250 °C aufgeschmolzen und homogenisiert.

Von den Formmassen wurden auf einer Spritzgußmaschine Stäbe der Abmessung 80 x 10 x 4 mm (Verarbeitungstemperatur: 280 °C) hergestellt, an denen die Kerbschlagzähigkeit (nach Methode ISO 180) bei Raumtemperatur, -20 °C, -40 °C und -60 °C gemessen wurde.

Daraus wurde der Zäh-Spröd-Übergang bestimmt, d.h. jener Temperaturbereich, in dem die ersten Sprödbrüche auftreten.

Das Spannungsrißverhalten wurde an Proportionalstäben 0,7, Massetemperatur 280 °C, gemäß DIN 53 449/3 untersucht. Als Kraftstoffsimulanz wurde eine Mischung aus 50 % Toluol und 50 % Isooctan verwendet. Die Probekörper wurden mittels einer Kreisbogenschablone vorgedehnt und 5 Minuten (bzw. 10 Minuten) bei 23 °C im Kraftstoffsimulant gelagert. Die Vordehnung $\epsilon_x$ betrug 0,4 bis 2,4 %. Das Spannungsrißverhalten wurde über die Rißbildung bzw. den Bruch in Abhängigkeit der Vordehnung beurteilt.

Die Bestimmung der Wärmeformbeständigkeit nach Vicat B erfolgte gemäß DIN 53 460.

Wie nachfolgende Tabelle zeigt, werden erfindungsgemäß (Beispiel 2-4) Formmassen erhalten, die gegenüber dem Vergleichsbeispiel 1 ein wesentlich höheres Niveau der Kerbschlagzähigkeit bei tiefen Temperaturen besitzen. Außerdem ist bei den erfindungsgemäßen Beispielen der Zäh/Spröd-Übergang nach tiefen Temperaturen verschoben (-30 °C). Die Vicattemperatur liegt bei gleichen Kautschukgehalt (Beispiel 2) gegenüber dem Vergleichsbeispiel 1 auf einen deutlich höherem Nivau. Das günstige Spannungsrißverhalten wird durch das erfindungsgemäße Pfropfpolymerisat nicht negativ beeinflußt. Sämtliche Probekörper besaßen vollkommen gleichmäßige Oberflächen.

**Zusammensetzung und Eigenschaften der Formmassen**

**Tabelle:**

| Beispiel | Komponenten A | $B^*$ | B1 | Kerbschlagzähigk. $a_k$ bei -20°C | Zäh/Spröd Übergang | Vicat B 120 DIN 53 460 | Bruch bei $\epsilon_x$ |
|---|---|---|---|---|---|---|---|
| | | Gew.-% | | kJ/m² | °C | °C | % |
| 1 (Vergleich) | 75 | 25 | - | 25,8 | 0/-10 | 169 | 2,4** |
| 2 | 85 | - | 15 | 48,6 | -30 | 177 | 2,4** |
| 3 | 80 | - | 20 | 49,3 | -30 | 172 | 2,4** |
| 4 | 75 | - | 25 | 46,8 | -30/-40 | 168 | 2,4** |

$B^*$ Pfropfpolymerisat vom 50 Gew.-Teilen eines Copolymerisats aus Styrol und Acrylnitril im Verhältnis 72:28 auf 50 Gew.-Teile teilchenförmigen Polybutadienkautschuk (Teilchengröße $d_{50}$ = 0,4 µm) hergestellt durch Emulsionspolymerisation.

** kein Bruch nach 10 Minuten

## Patentansprüche

1. Thermoplastische Formmassen enthaltend

A. 5 bis 99 Gew.-%, bezogen auf die Summe A + B, eines aromatischen Polyethersulfons mit einer Grundstruktur, die aus wiederkehrenden Einheiten der Formel (I)

$$\{O\text{-}Z\text{-}O\text{-}W\} \quad (I)$$

besteht,
worin Z den Rest eines zweiwertigen Phenols und W den Rest einer benzoiden Dihalogenverbindung mit einer inerten, elektronenanziehenden Gruppe bedeuten und mindestens einer der Reste Z und/oder W eine Sulfongruppe zwischen aromatischen Kohlenstoffatomen liefert
und
B. 1 bis 95 Gew.-%, bezogen auf die Summe A + B, eines Pfropfpolymerisats von
B.1 5 bis 90 Gewichtsteilen einer Mischung aus
B.1.1 20 bis 99 Gewichtsteilen Methylmethacrylat und
B.1.2 1 bis 40, Gew.-Teilen Acrylsäureester eines primären oder sekundären einwertigen aliphatischen $C_2$-$C_{10}$-Alkohols und gegebenenfalls
B.1.3 0 bis 10, Gew.-Teilen Acryl- oder Methacrylsäureester des tert.-Butanols und/oder
B.1.4 0 bis 30 Gew.-Teilen einer Mischung aus 50 bis 95 Gewichtsteilen Styrol, $\alpha$-Methylstyrol, $C_1$-$C_4$-Alkyl- oder Halogenkernsubstituertem Styrol oder Mischungen daraus und 5 bis 50 Gewichtsteilen Acrylnitril, Methacrylnitril, Maleinsäureanhydrid, $C_1$-$C_4$-Alkyl- bzw. Phenyl-N-substuiertem Maleinimid oder Mischungen daraus, wobei die Summe der Gewichtsteile aus B.1.1 und B.1.2 sowie gegebenenfalls B.1.3 und/oder B.1.4 100 betragen soll, auf
B.2 10 bis 95 Gewichtsteile eines vernetzten Butadienkautschuks mit einem mittleren Teilchendurchmesser $d_{50}$ von 0.05 bis 1, und einem Gelgehalt von mehr als 50 Gew.-%, bezogen auf Gewicht an B.2.

**2.** Formmassen gemäß Anspruch 1 enthaltend 40 bis 98 Gew.-% Komponente A und 2 bis 60 Gew.-% Komponente B.

**3.** Formmassen gemäß Anspruch 1 enthaltend 60 bis 97 Gew.-% Komponente A und 3 bis 40 Gew.-% Komponente B.

**4.** Formmassen gemäß Ansprüchen 1-3, dadurch gekennzeichnet, daß Pfropfpolymerisat B aus 10 bis 70 Gewichtsteilen Pfropfmonomeren B.1 und 30 bis 90 Gewichtsteilen Butadienkautschuk B.2 hergestellt ist.

**5.** Formmassen gemäß Ansprüchen 1-4, dadurch gekennzeichnet, daß das Pfropfpolymerisat B aus 15 bis 50 Gewichtsteilen Pfropfmonomeren B.1 und 50 bis 85 Gewichtsteilen Butadienkautschuk B.2 hergestellt ist.

**6.** Formmassen gemäß Ansprüchen 1-5, dadurch gekennzeichnet, daß der Teilchendurchmesser $d_{50}$ des Butadienkautschuks B.2 0.05 bis 0.8 $\mu$m beträgt.

**7.** Formmassen gemäß Ansprüchen 1-6, dadurch gekennzeichnet, daß der Gelgehalt des Butadienkautschuks B.2 mehr als 70 Gew.-% beträgt.

**8.** Formmassen gemäß Ansprüchen 1-7, dadurch gekennzeichnet, daß der Gelgehalt des Butadienkautschuks B.2 73 bis 98 Gew.-%., bezogen auf Gewicht an B.2, beträgt.

**9.** Formmassen gemäß Ansprüchen 1-8, dadurch gekennzeichnet, daß sie zusätzlich mindestens einen Zusatz, ausgewählt aus der Gruppe der Stabilisatoren, Pigmente, Entformungsmittel, Flammschutzmittel und Antistatika, enthalten.

**10.** Verfahren zur Herstellung der Formmassen der Ansprüche 1 bis 9, dadurch gekennzeichnet, daß man die Komponenten A, B und gegebenenfalls Stabilisatoren, Pigmente, Entformungsmittel, Flammschutzmittel und/oder Antistatika in bekannter Weise vermischt und bei erhöhter Temperatur in üblichen Vorrichtungen schmelzcompoundiert oder schmelzextrudiert.

## Claims

1. Thermoplastic moulding compounds containing
   A. 5 to 99 wt.%, related to the sum of A + B, of an aromatic polyether sulphone with a basic structure consisting of repeat units of the formula (I)

   -[-O-Z-O-W-]- (I)

   in which Z means the residue of a dihydric phenol and W means the residue of a benzenoid dihalogen compound with an inert, electron-attracting group, and at least one of the residues Z and/or W provides a sulphone group between aromatic carbon atoms
   and
   B. 1 to 95 wt.%, related to the sum of A + B, of a graft polymer of
   B.1 5 to 90 parts by weight of a mixture of
   B.1.1 20 to 99 parts by weight of methyl methacrylate and
   B.1.2 1 to 40 parts by weight of an acrylic acid ester of a primary or secondary monohydric, aliphatic $C_2$-$C_{10}$ alcohol and optionally
   B.1.3 0 to 10 parts by weight of the acrylic or methacrylic acid ester of tert.-butanol and/or
   B.1.4 0 to 30 parts by weight of a mixture of 50 to 95 parts by weight of styrene, $\alpha$-methylstyrene, $C_1$-$C_4$ alkyl- or halogen-ring-substituted styrene or mixtures thereof and 5 to 50 parts by weight of acrylonitrile, methacrylonitrile, maleic anhydride, $C_1$-$C_4$ alkyl- or phenyl-N-substituted maleimide or mixtures thereof, wherein the sum of the parts by weight of B.1.1 and B.1.2, optionally together with B.1.3 and/or B.1.4 should be 100, onto
   B.2 10 to 95 parts by weight of a crosslinked butadiene rubber with an average particle diameter $d_{50}$ of 0.05 to 1 $\mu$m and a gel content of greater than 50 wt.%, related to the weight of B.2.

2. Moulding compounds according to claim 1 containing 40 to 98 wt.% of component A and 2 to 60 wt.% of component B.

3. Moulding compounds according to claim 1 containing 60 to 97 wt.% of component A and 3 to 40 wt.% of component B.

4. Moulding compounds according to claims 1-3, characterised in that graft polymer B is produced from 10 to 70 parts by weight of graft monomers B.1 and 30 to 90 parts by weight of butadiene rubber B.2.

5. Moulding compounds according to claims 1-4, characterised in that graft polymer B is produced from 15 to 50 parts by weight of graft monomers B.1 and 50 to 85 parts by weight of butadiene rubber B.2.

6. Moulding compounds according to claims 1-5, characterised in that the particle diameter $d_{50}$ of the butadiene rubber B.2 is 0.05 to 0.8 $\mu$m.

7. Moulding compounds according to claims 1-6, characterised in that the gel content of the butadiene rubber B.2 is greater than 70 wt.%.

8. Moulding compounds according to claims 1-7, characterised in that the gel content of the butadiene rubber B.2 is 73 to 98 wt.%, related to the weight of B.2.

9. Moulding compounds according to claims 1-8, characterised in that they additionally contain at least one additive selected from the group of stabilisers, pigments, mould release agents, flame retardants and antistatic agents.

10. Process for the production of the moulding compounds of claims 1 to 9, characterised in that the components A, B and optionally stabilisers, pigments, mould release agents, flame retardants and/or antistatic agents are mixed together in a known manner and are melt-compounded or melt-extruded at elevated temperature in customary equipment.

## Revendications

1. Matières à mouler thermoplastiques contenant
   A. 5 à 99% en poids, par rapport à la somme A + B, d'une polyéther-sulfone aromatique dont la structure fondamentale consiste en motifs répétés de formule I

   $$\left[ \text{O-Z-O-W} \right] \quad (I)$$

   dans laquelle
   Z représente le radical d'un phénol divalent et W le radical d'un composé benzoïde dihalogéné avec un groupe inerte accepteur d'électrons, au moins un des radicaux Z et/ou W apportant un groupe sulfone entre des atomes de carbone aromatique, et
   B. 1 à 95% en poids, par rapport à la somme A + B, d'un polymère greffé de
   B.1 5 à 90 parties en poids d'un mélange de
   B.1.1 20 à 99 parties en poids de méthacrylate de méthyle et
   B.1.2 1 à 40 parties en poids d'ester acrylique d'un alcool aliphatique monovalent primaire ou secondaire en $C_2$-$C_{10}$ et le cas échéant
   B.1.3 0 à 10 parties en poids d'ester acrylique ou méthacrylique du tert-butanol, et/ou
   B.1.4 0 à 30 parties en poids d'un mélange de 50 à 95 parties en poids de styrène, d'$\alpha$-méthylstyrène, d'un styrène à substituants alkyle en $C_1$-$C_4$ ou halogéno dans le noyau ou d'un mélange de tels styrènes et de 5 à 50 parties en poids d'acrylonitrile, de méthacrylonitrile, d'anhydride maléique, d'un maléimide à substituant N-alkyle en $C_1$-$C_4$ ou N-phényle ou d'un mélange de tels maléimides, la somme des parties en poids de B.1.1 et de B.1.2 et, le cas échéant, de B.1.3 et/ou de B.1.4, étant égale à 100, sur
   B.2 10 à 95 parties en poids d'un caoutchouc de butadiène réticulé à un diamètre de particule moyen $d_{50}$ de 0,05 à 1 et une teneur en gel supérieure à 50% en poids, par rapport au poids de B.2.

2. Matières à mouler selon revendication 1, contenant 40 à 98% en poids du composant A et 2 à 60% en poids du composant B.

3. Matières à mouler selon revendication 1, contenant 60 à 97% en poids du composant A et 3 à 40% en poids du composant B.

4. Matières à mouler selon les revendications 1 à 3, caractérisées en ce que le polymère greffé B est préparé à partir de 10 à 70 parties en poids des monomères de greffage B.1 et de 30 à 90 parties en poids du caoutchouc de butadiène B.2.

5. Matières à mouler selon les revendications 1 à 4, caractérisées en ce que le polymère gréffé B est préparé à partir de 15 à 50 parties en poids des monomères de greffage B.1. et 50 à 85 parties en poids du caoutchouc de butadiène B.2.

6. Matières à mouler selon les revendications 1 à 5, caractérisées en ce que le diamètre de particule $d_{50}$ du caoutchouc de butadiène B.2. est de 0,05 à 0,8, $\mu$m.

7. Matières à mouler selon les revendications 1 à 6, caractérisées en ce que la teneur en gel du caoutchouc de butadiène B.2. est supérieure à 70% en poids.

8. Matières à mouler selon les revendications 1 à 7, caractérisées en ce que la teneur en gel du caoutchouc de butadiène B.2 est de 73 à 98% en poids, par rapport au poids de B.2.

9. Matières à mouler selon les revendications 1 à 8, caractérisées en ce qu'elles contiennent en outre au moins un additif choisi parmi les stabilisants, les pigments, les agents de démoulage, les agents ignifugeants et les agents antistatiques.

10. Procédé de préparation des matières à mouler selon les revendications 1 à 9, caractérisé en ce que l'on soumet les composants A, B et le cas échéant des stabilisants, des pigments, des agents de démoulage, des agents ignifugeants et/ou des agents antistatiques à mélange de manière connue puis

à mélange ou extrusion à l'état fondu à température élevée dans des appareillages usuels.